# EUROPÄISCHE PATENTANMELDUNG

(11) **EP 4 361 023 A1**
(43) Veröffentlichungstag der Anmeldung: **01.05.2024**
(21) Anmeldenummer: 23192314.5
(22) Anmeldetag: 21.08.2023
(51) Int. Cl.: B64C 1/14

(54) **VORRICHTUNG ZUR SCHAFFUNG EINES AUSGESTEIFTEN BEREICHS AN EINER AUSSENSTRUKTUR EINES LUFTFAHRZEUGS ZUR BEDARFSWEISEN NACHTRÄGLICHEN BEREITSTELLUNG EINES SERVICE-ZUGANGS SOWIE VERFAHREN ZUR HERSTELLUNG UND NUTZUNG EINES DERARTIGEN SERVICE-ZUGANGS**

(30) Priorität: 27.10.2022 DE 102022211424
(71) Anmelder: Airbus Defence and Space GmbH, 82024 Taufkirchen (DE)
(72) Erfinder: MEISNER, Christoph, 82024 Taufkirchen (DE); DITTRICH, Kay, 82024 Taufkirchen (DE); CALOMFIRESCU, Mircea, 82024 Taufkirchen (DE); BRINKMANN, Sven, 82024 Taufkirchen (DE)
(74) Vertreter: Isarpatent

(57) **Zusammenfassung**

Die vorliegende Erfindung schafft eine Vorrichtung (1) zur Schaffung eines ausgesteiften Bereichs an einer Außenstruktur (2) eines Luftfahrzeugs zur bedarfsweisen nachträglichen Bereitstellung eines Service-Zugangs, die Vorrichtung (1) aufweisend: eine Außenstruktur (2); eine Verstärkungsplatte (3), welche in einem vorbestimmten Installationsbereich an einer Innenseite der Außenstruktur (2) angebracht ist und eine Kontaktfläche (4) zwischen der Verstärkungsplatte (3) und der Außenstruktur (2) ausbildet, wobei die Verstärkungsplatte (3) eine Durchgangsöffnung (5) entlang der Flächennormalen der Kontaktfläche (4) aufweist; und einen Verbindungswerkstoff (6), welcher in einem Randbereich (4a) der Kontaktfläche (4) die Verstärkungsplatte (3) mit der Außenstruktur (2) stoff- und/oder formschlüssig verbindet. Darüber hinaus schafft die Erfindung ein Luftfahrzeug mit einer derartigen Vorrichtung (1). Ferner schafft die vorliegende Erfindung ein Verfahren (V) zur Herstellung und Nutzung eines Service-Zugangs für eine Außenstruktur (2) eines Luftfahrzeugs unter Verwendung einer derartigen Vorrichtung (1).

## Beschreibung

Die vorliegende Erfindung betrifft eine Vorrichtung zur Schaffung eines ausgesteiften Bereichs an einer Außenstruktur eines Luftfahrzeugs zur bedarfsweisen nachträglichen Bereitstellung eines Service-Zugangs, ein Luftfahrzeug mit einer derartigen Vorrichtung sowie ein Verfahren zur Herstellung und Nutzung eines Service-Zugangs für eine Außenstruktur eines Luftfahrzeugs.

Gegenwärtige Zugangspaneele werden an Stellen installiert, an denen Systeme unter anderem unter der Flugzeughaut während der Lebensdauer des Flugzeugs einen Wartungs- und Instandhaltungszugang benötigen. Zugangspaneele werden üblicherweise mit einer speziell dafür vorgesehenen Tür und einer speziellen Landezone an der Struktur, an der die Tür befestigt ist, mit zugehörigen hohen Toleranzanforderungen und weiteren Materialien versehen, um die spezifischen Anforderungen, wie z.B. die aerodynamische Oberflächengüte des jeweiligen Bauteils, zu gewährleisten. Diese Maßnahmen sind erforderlich, da der Spalt um die Zugangstür und die entstehenden Kanten die Leistungsfähigkeit des Fluggeräts beispielsweise hinsichtlich der Aerodynamik einschränken würden. Die Maßnahmen zur Realisierung der gegenwärtigen Zugangspaneele erhöhen dabei die Herstellungs-, Wartungs- und Instandhaltungskosten für das Gesamtprodukt und erhöhen gleichzeitig das Gesamtgewicht der Luftfahrzeugstruktur.

Es ist Aufgabe der vorliegenden Erfindung, einen kostengünstigeren und einfacheren Service-Zugang für Wartungsarbeiten an einem Luftfahrzeug bereitzustellen.

Erfindungsgemäß wird diese Aufgabe jeweils durch die Gegenstände der unabhängigen Ansprüche gelöst.

Gemäß einem ersten Aspekt der Erfindung ist eine Vorrichtung zur Schaffung eines ausgesteiften Bereichs an einer Außenstruktur eines Luftfahrzeugs zur bedarfsweisen nachträglichen Bereitstellung eines Service-Zugangs vorgesehen. Die Vorrichtung umfasst eine Außenstruktur und eine Verstärkungsplatte, welche in einem vorbestimmten Installationsbereich an einer Innenseite der Außenstruktur angebracht ist und eine Kontaktfläche zwischen der Verstärkungsplatte und der Außenstruktur ausbildet. Dabei weist die Verstärkungsplatte eine Durchgangsöffnung entlang der Flächennormalen der Kontaktfläche auf. Ferner umfasst die Vorrichtung einen Verbindungswerkstoff, welcher in einem Randbereich der Kontaktfläche die Verstärkungsplatte mit der Außenstruktur stoff- und/oder formschlüssig verbindet.

Gemäß einem zweiten Aspekt der Erfindung ist ein Luftfahrzeug mit einer erfindungsgemäßen Vorrichtung vorgesehen.

Gemäß einem dritten Aspekt der Erfindung ist ein Verfahren zur Herstellung und Nutzung eines Service-Zugangs für eine Außenstruktur eines Luftfahrzeugs vorgesehen. Das Verfahren umfasst den Schritt Bereitstellen einer erfindungsgemäßen Vorrichtung sowie den Schritt Heraustrennen einer Sektion der Außenstruktur zumindest bereichsweise entlang der Kontaktfläche zum Bereitstellen des verschließbaren Service-Zugangs, wobei die Sektion eine geringere flächige Erstreckung aufweist als die Verstärkungsplatte.

Eine der vorliegenden Erfindung zugrunde liegende Idee besteht darin, die Außenstruktur des Luftfahrzeugs derart zu behandeln, dass ein zusätzlicher Riemen beziehungsweise eine Verstärkungsplatte von der Innenseite der Außenstruktur hinzugefügt wird. Dieser zusätzliche Riemen bietet einen ausgesteiften Bereich für eine neue Zugangsklappe, falls erforderlich. Diese vorbestimmten Installationsbereiche für die Zugangsklappe werden bereits bei der Konstruktion berücksichtigt. Bei Bedarf wird die Zugangsklappe im späteren Betrieb geöffnet.

Viele Ausrüstungen beziehungsweise austauschbaren Teile (Line Replaceable Items; LRI) sind wartungsfrei konzipiert und müssen nur im Falle eines Ausfalls zugänglich sein. Bei vielen Luftfahrzeugen besteht daher keine Notwendigkeit für den Zugang zu diesen Ausrüstungen. Folglich ist im Normalfall auch keine Zugangsklappe erforderlich. Im Fehlerfall müssen die Geräte, Leitungen usw. jedoch repariert oder ausgetauscht werden. In diesem Fall kann die Zugangsklappe für einen Zugang erstellt werden.

Ein Vorteil der vorliegenden Erfindung liegt darin, dass die Kosten und die Komplexität von Zugangsklappen reduziert werden können. Ferner kann die vorliegende Erfindung sicherstellen, dass die Gesamtanforderungen an die Oberflächengüte erfüllt werden. Darüber hinaus verbessert die vorliegende Erfindung das Problem des nachträglichen Einsatzes von Revisionsklappen in Bereichen, die bei der Konstruktion als "wartungsfrei" definiert wurden, die aber aufgrund von Betriebserfahrungen ungeplante regelmäßige Wartungsmaßnahmen erfordern.

Des Weiteren kann die Gesamtzahl der Zugangsklappen reduziert werden. Weiterhin kann durch die bereits implementierte Verstärkungsplatte eine perfekte Passgenauigkeit der neu erstellten Zugangsklappe gewährleistet werden.

Vorteilhafte Ausführungsformen und Weiterbildungen ergeben sich aus den auf die unabhängigen Ansprüche rückbezogenen Unteransprüchen sowie aus der Beschreibung unter Bezugnahme auf die Figuren.

Gemäß einer Ausführungsform der Vorrichtung weist die Außenstruktur eine heraustrennbare Sektion auf, welche eine geringere flächige Erstreckung aufweist als die Verstärkungsplatte, wobei die Durchgangsöffnung eine geringere flächige Erstreckung aufweist als die heraustrennbare Sektion, so dass ein erster Kontaktbereich der Kontaktfläche zwischen der Verstärkungsplatte und einem Randbereich der heraustrennbaren Sektion und ein zweiter Kontaktbereich der Kontaktfläche zwischen der Verstärkungsplatte und einem an den Randbereich der heraustrennbaren Sektion angrenzenden Bereich der Struktur ausgebildet ist. Auf diese Weise kann die heraustrennbare Sektion an ihrer Innenseite beim Wiedereinbau auf die Verstärkungsplatte montiert sein. Damit können aufwendige Positionierungsmaßnahmen verringert werden, um die Sektion möglichst eben an die Außenstruktur anzupassen, so dass die Übergange zwischen Sektion und Außenstruktur im Wesentlichen plan sind. Weiter kann der Randbereich der heraustrennbaren Sektion durch die Verstärkungsplatte in geeigneter Weise gestützt werden.

Gemäß einer weiteren Ausführungsform weist die Vorrichtung ferner eine Trenneinrichtung zur rückstandsfreien Ablösung einer heraustrennbaren Sektion der Außenstruktur von der Verstärkungsplatte auf, welche zumindest abschnittsweise in dem ersten Kontaktbereich der Kontaktfläche vorgesehen ist.

Somit kann dort, wo die Trenneinrichtung vorgesehen ist, ein Verkleben der Außenstruktur mit der Verstärkungsplatte vermieden werden, um die heraustrennbare Sektion einfacher entnehmen zu können, sobald die Sektion von der Außenstruktur getrennt ist.

Gemäß einer Weiterbildung der Vorrichtung ist die Trenneinrichtung als Trennfolie, als Abreißgewebe oder als Trennmittel ausgebildet. Vorzugsweise kann die Trennfolie aus Fluorpolymer hergestellt sein. Das Trennmittel kann insbesondere als Trennflüssigkeit ausgebildet sein. Somit weist die Trenneinrichtung hinreichende Hafteigenschaften auf verschiedenen Materialien, insbesondere auf Faserverbundwerkstoffen, auf. Ferner kann die Trennfolie oder das Abreißgewebe auf einfache Art und Weise mit der Hand abgezogen werden.

Gemäß einer Weiterbildung der Vorrichtung ist die Trenneinrichtung vollständig entlang des Randbereichs der heraustrennbaren Sektion ausgebildet.

Gemäß einer Weiterbildung der Vorrichtung ist der erste Kontaktbereich als Stützrahmen zum Abstützen des Randbereichs der heraustrennbaren Sektion ausgebildet. Auf diese Weise ist die heraustrennbare Sektion auch größer als die Durchgangsöffnung und kann daher nicht durch die Außenstruktur in das Innere des Luftfahrzeugs hineinfallen.

Gemäß einer weiteren Ausführungsform der Vorrichtung weist die Verstärkungsplatte zumindest eines der folgenden Materialien auf: ein metallisches Material, insbesondere Aluminium, ein keramisches Material, ein Polymermaterial und ein faserverstärktes Verbundmaterial, insbesondere ein Kohlenstofffaserverbundmaterial oder ein Glasfaserverbundmaterial. Somit kann die Verstärkungsplatte ein geringes Gewicht aufweisen. Zudem sind diese Materialien im Luftfahrzeugbau umfangreich erprobt und bewährt, so dass sie vergleichsweise zügig für die Luftfahrt qualifiziert werden können.

Gemäß einer weiteren Ausführungsform der Vorrichtung ist die Verstärkungsplatte aus demselben Material hergestellt wie die Außenstruktur. Damit weist die Verstärkungsplatte dieselben Eigenschaften auf wie die Außenstruktur. Insbesondere kann sich das vorteilhaft auf die Wärmeausdehnung und die elektrische und/oder thermische Leitfähigkeit auswirken, da Luftfahrzeuge enormen Temperaturschwankungen ausgesetzt sein können.

Gemäß einer weiteren Ausführungsform der Vorrichtung enthält der Verbindungswerkstoff zumindest eines der folgenden Materialien: Epoxidharz, Cyanacrylat, Acrylatmonomere, MS-Polymere, Polyurethan, Thermoplaste und Silikon. Mit einem derartigen Verbindungswerkstoff kann auch bei sich ändernden Temperaturen und/oder Luftfeuchtigkeiten eine hinreichende Klebehaftung bewirkt werden. Ferner kann der Verbindungswerkstoff an die Fügepartner, also das Material der Verstärkungsplatte und/oder der Außenstruktur angepasst sein.

Gemäß einer weiteren Ausführungsform des Verfahrens umfasst das Heraustrennen der Sektion ein Fräsen der Außenstruktur. Somit kann beispielsweise die Außenstruktur von außen in einer vordefinierten Tiefe gefräst werden. Somit kann die Beschädigung von nah an der Außenstruktur positionierten sonstigen Komponenten oder Ausrüstungen innerhalb der Außenstruktur vermieden werden. Die Kanten an der Außenstruktur können unbehandelt bleiben, da sie von der Verstärkungsplatte zumindest von einer Seite geschützt sind.

Optional kann das Heraustrennen zunächst ein Fräsen einer Bohrung durch den Randbereich der heraustrennbaren Sektion hindurch und zumindest teilweise in die Verstärkungsplatte umfassen bevor die heraustrennbare Sektion von der Außenstruktur getrennt wird. Auf diese Weise kann ein Passungsproblem verringert werden.

Alternativ oder zusätzlich kann der Schritt Heraustrennen der Sektion eine Verwendung eines Lasers oder eines vergleichbaren Schneidgeräts umfassen.

Optional kann die Sektion durch einen automatisierten Vorgang, vorzugsweise durch einen Industrieroboter, heraus getrennt werden.

Gemäß einer weiteren Ausführungsform weist das Verfahren ferner Durchführen von Wartungs- und Instandhaltungsarbeiten an einem Ausstattungsgegenstand des Luftfahrzeugs anhand des Service-Zugangs auf. Der Ausstattungsgegenstand kann beispielsweise eine Ausrüstung, eine Komponente oder ein vergleichbares Bauteil sein, welches in dem Luftfahrzeug verbaut oder gelagert ist. Der Service-Zugang kann den Zugang oder den Zugriff auf den Ausstattungsgegenstand vereinfachen. Je nachdem wie groß die Durchgangsöffnung beziehungsweise der Service-Zugang dimensioniert ist kann ein Techniker in das Luftfahrzeug hineingreifen oder zumindest teilweise in das Luftfahrzeug hineinragen/-steigen.

Gemäß einer weiteren Ausführungsform weist das Verfahren ferner Verschließen des Service-Zugangs mittels der herausgetrennten Sektion der Außenstruktur auf. Somit kann der Service-Zugang passgenau verschlossen werden. Etwaige Fertigungstoleranzen oder sonstigen Ungenauigkeiten bei der Herstellung von alternativen Verschlusselementen können dadurch vermieden werden.

Gemäß einer weiteren Ausführungsform weist das Verfahren ferner Befestigen der herausgetrennten Sektion der Außenstruktur an der Verstärkungsplatte auf. Somit kann die herausgetrennte Sektion entweder für einen einmaligen Zugang im Falle einer unlösbaren Befestigung oder für einen regelmäßigen Zugang erstellt werden, wenn neue Informationen vorliegen, die auf die Notwendigkeit eines regelmäßigen Zugangs zu diesem Bereich hindeuten. Im zweiten Fall wird die herausgetrennte Sektion lösbar an der Verstärkungsplatte befestigt. Optional kann für die lösbare Befestigung eine beim Heraustrennen vorgebohrte Bohrung durch den Randbereich der heraustrennbaren Sektion hindurch und zumindest teilweise in die Verstärkungsplatte verwendet werden.

Gemäß einer weiteren Ausführungsform weist das Verfahren ferner Abdichten der Außenstruktur mittels eines Dichtstoffes auf, welcher in einen beim Heraustrennen entstandenen Spalt eingebracht wird. Auf diese Weise kann die Dichtheit der Außenstruktur, insbesondere die Dichtheit gegen Schmutz und/oder Fluideintritt, erhöht werden.

Die obigen Ausführungsformen und Weiterbildungen lassen sich, sofern sinnvoll, beliebig miteinander kombinieren. Weitere mögliche Ausführungsformen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand von Ausführungsbeispielen unter Bezugnahme auf die beiliegenden Figuren der Zeichnungen näher erläutert. Von den Figuren zeigen:
- Fig. 1: eine schematische Schnittansicht einer Vorrichtung zur Schaffung eines ausgesteiften Bereichs an einer Außenstruktur eines Luftfahrzeugs zur bedarfsweisen nachträglichen Bereitstellung eines Service-Zugangs gemäß einem Ausführungsbeispiel der Erfindung;
- Fig. 2: eine schematische Schnittansicht einer Vorrichtung zur Schaffung eines ausgesteiften Bereichs an einer Außenstruktur eines Luftfahrzeugs zur bedarfsweisen nachträglichen Bereitstellung eines Service-Zugangs mit einer herausgetrennten Sektion der Außenstruktur gemäß einem weiteren Ausführungsbeispiel der Erfindung;
- Fig. 3: eine schematische Schnittansicht einer Vorrichtung zur Schaffung eines ausgesteiften Bereichs an einer Außenstruktur eines Luftfahrzeugs zur bedarfsweisen nachträglichen Bereitstellung eines Service-Zugangs mit einer an der Verstärkungsplatte befestigten Sektion der Außenstruktur gemäß einem weiteren Ausführungsbeispiel der Erfindung;
- Fig. 4: eine schematische Seitenansicht eines Luftfahrzeugs mit einer Vorrichtung gemäß einem Ausführungsbeispiel der Erfindung;
- Fig. 5: ein Ablaufdiagramm eines Verfahrens zur Herstellung und Nutzung eines Service-Zugangs für eine Außenstruktur eines Luftfahrzeugs gemäß einem Ausführungsbeispiel der Erfindung.

In den Figuren der Zeichnung sind gleiche, funktionsgleiche und gleich wirkende Elemente, Merkmale und Komponenten - sofern nichts Gegenteiliges ausgeführt ist - jeweils mit denselben Bezugszeichen versehen.

Obwohl vorliegend spezifische Ausführungsformen und Weiterbildungen dargestellt und beschrieben sind, wird der Fachmann bevorzugen, dass eine Vielzahl von alternativen und/oder gleichartigen Ausführungen die dargestellten und beschriebenen spezifischen Ausführungsbeispiele ersetzen können, ohne vom Umfang der vorliegenden Erfindung abzukehren. Diese Anmeldung soll allgemein alle Abwandlungen oder Änderungen der hierin beschriebenen spezifischen Ausführungsbeispiele abdecken.

Die beiliegenden Figuren sollen ein weiteres Verständnis von Ausführungsformen der Erfindung vermitteln und dienen im Zusammenhang mit der Beschreibung der Erklärung von Prinzipien und Konzepten der Erfindung. Andere Ausführungsbeispiele und viele der genannten Vorteile ergeben sich im Hinblick auf die Zeichnungen. Die Zeichnungen sind lediglich als schematische Zeichnungen zu verstehen und die Elemente der Zeichnungen sind nicht notwendigerweise maßstabsgetreu zueinander dargestellt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

Ein Verbindungswerkstoff im Sinne der vorliegenden Erfindung umfasst sowohl einen zusätzlich einzubringenden Verbindungswerkstoff, welcher die Außenstruktur und die Verstärkungsplatte miteinander befestigt, insbesondere einen Klebstoff, als auch ein von der Außenstruktur und/oder von der Verstärkungsplatte enthaltener Verbindungswerkstoff, welcher sich mit dem Werkstoff der jeweils anderen Komponente, also der Verstärkungsplatte oder der Außenstruktur, beim Fügen stoffschlüssig verbindet. Insbesondere umfasst der erfindungsgemäße Verbindungswerkstoff den Anteil des Matrixwerkstoffes eines Faserverbundmaterials, welcher in einem sogenannten Co-Curing-Verfahren zur stoffschlüssigen Verbindung mit einem Fügepartner aushärtet.

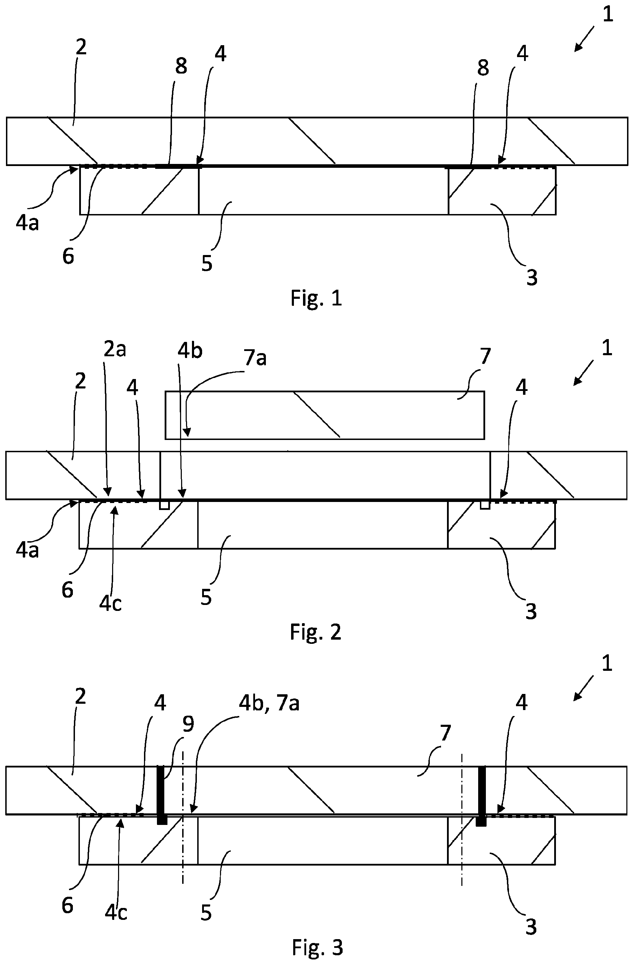

Fig. 1 zeigt eine schematische Schnittansicht einer Vorrichtung 1 zur Schaffung eines ausgesteiften Bereichs an einer Außenstruktur 2 eines Luftfahrzeugs zur bedarfsweisen nachträglichen Bereitstellung eines Service-Zugangs.

Die Vorrichtung 1 umfasst eine Außenstruktur 2, eine Verstärkungsplatte 3, eine Kontaktfläche 4 zwischen der Außenstruktur 2 und der Verstärkungsplatte 3, eine Durchgangsöffnung 5, einen Verbindungswerkstoff 6 und eine optionale Trenneinrichtung 8.

Die Außenstruktur 2 ist durch einen Ausschnitt dargestellt und kann sich auch über den dargestellten Ausschnitt hinaus erstrecken. Dabei kann die Außenstruktur 2 zumindest abschnittsweise eben oder gekrümmt ausgebildet sein. Weiterhin kann die Außenstruktur 2 Aluminium und/oder eine Faserverbundwerkstoff enthalten. Optional kann die Außenstruktur 2 an ihrer Innenseite, ihrer Außenseite oder an Innen- und Außenseite zumindest abschnittsweise eine Beschichtung aufweisen. Darüber hinaus weist die Außenstruktur 2 einen vorbestimmten Installationsbereich auf, welcher bei der Konstruktion festgelegt wird. Vorzugsweise ist die Außenstruktur 2 als aerodynamische Außenstruktur ausgebildet.

Die Verstärkungsplatte 3 ist an der Innenseite der Außenstruktur 2 in dem vorbestimmten Installationsbereich mechanisch montiert. Insbesondere ist die Verstärkungsplatte 3 mit der Außenstruktur 2 stoffschlüssig verbunden Alternativ oder zusätzlich kann die Verstärkungsplatte 3 an der Außenstruktur 2 mittels einer Nietverbindung, einer Schraubverbindung oder dergleichen montiert sein. Dabei bilden die Verstärkungsplatte 3 und die Außenstruktur 2 die gemeinsame Kontaktfläche 4 aus. Vorzugsweise korrespondiert die Geometrie der Verstärkungsplatte 3 bei der Kontaktfläche 4 im Wesentlichen der Geometrie der Innenseite der Außenstruktur 2 bei der Kontaktfläche 4.

Ferner weist die Verstärkungsplatte 3 die Durchgangsöffnung 5 auf, welche sich entlang der Flächennormalen der Kontaktfläche 4 erstreckt. Die Durchgangsöffnung 5 ist beispielsweise rund, vieleckig oder Kombination daraus ausgebildet. Weiter ist die Durchgangsöffnung 5 derart dimensioniert, dass ein Wartungstechniker hinreichend Platz hat, an hinter der Außenstruktur 2 positionierte Ausstattungsgegenstände zu greifen oder Werkzeuge durchzureichen. Alternativ oder zusätzlich kann die Durchgangsöffnung derart dimensioniert sein, dass der Wartungstechniker Teile seines Körpers durch die Durchgangsöffnung 5 strecken kann und/oder zumindest einen Bereich/ein Bauteil der Ausstattungsgegenstände durch die Durchgangsöffnung 5 herausnehmen kann.

Der Verbindungswerkstoff 6 ist in einem Randbereich 4a der Kontaktfläche 4 vorgesehen. Wahlweise ist der Verbindungswerkstoff 6 an dem gesamten umlaufenden Randbereich 4a der Kontaktfläche 4 oder abschnittsweise an dem umlaufenden Randbereich 4a vorgesehen. Der Verbindungswerkstoff 6 enthält insbesondere Cyanacrylat, Epoxidharz, Polyester, Thermoplaste und/oder Acrylatmonomere.

Optional weist die Vorrichtung 1 die Trenneinrichtung 8 auf, welche hier als Trennfolie ausgebildet ist. Beispielhaft ist die Trennfolie 8 zumindest abschnittsweise in einem zweiten Kontaktbereich 4c zwischen dem Randbereich 4a der Kontaktfläche 4, in welchem der Verbindungswerkstoff 6 zumindest abschnittsweise enthalten ist, und der Durchgangsöffnung 5 vorgesehen ist. Anders ausgedrückt ist die Trennfolie 8 zumindest abschnittsweise in dem zweiten Kontaktbereich 4c der Kontaktfläche 4 vorgesehen. Beispielhaft ist die Trennfolie 8 in Fig. 1 so abgebildet, dass sie sowohl an den Verbindungswerkstoff 6 als auch an die Durchgangsöffnung 5 grenzt. Das heißt die Trennfolie 8 liegt dort, wo an der Kontaktfläche 4 kein Verbindungswerkstoff 6 angeordnet ist. Dabei kann die Trennfolie 8 an der Verstärkungsplatte 3 und/oder an der Außenstruktur 2 haften. Alternativ kann die Trennfolie 8 durch den Anpressdruck zwischen der Verstärkungsplatte 3 und der Außenstruktur 2 in Position gehalten werden.

Alternativ kann der Verbindungswerkstoff 6 mit der Trenneinrichtung 8 zumindest abschnittsweise überlappen. Das heißt der Verbindungswerkstoff 6 kann sich beispielsweise über die gesamte Kontaktfläche 4 erstrecken, wobei in dem ersten Kontaktbereich 4b die Trenneinrichtung 8 vorgesehen ist und eine Haftung des Verbindungswerkstoffes 6 zu mindestens einem der beiden Fügepartner, also zu der heraustrennbaren Sektion 7 und/oder der Verstärkungsplatte 3, verhindert.

Ferner kann die Trenneinrichtung 8 derart in Bezug zu dem Verbindungswerkstoff 6 in dem Randbereich 4a der Kontaktfläche 4 angeordnet sein, dass eine Sektion 7 der Außenstruktur 2 innerhalb der Kontaktfläche 4, das heißt entlang der Kontaktfläche 4, heraustrennbar ist, wobei die Sektion 7 eine geringere flächige Erstreckung aufweist als die Verstärkungsplatte 3.

Fig. 2 zeigt eine schematische Schnittansicht einer Vorrichtung 1 zur Schaffung eines ausgesteiften Bereichs an einer Außenstruktur 2 eines Luftfahrzeugs zur bedarfsweisen nachträglichen Bereitstellung eines Service-Zugangs mit einer herausgetrennten Sektion 7 der Außenstruktur 2.

Die Vorrichtung 1 nach Fig. 2 weist im Wesentlichen die gleichen Merkmale auf wie die Vorrichtung nach Fig. 1, wobei die Fig. 2 einen Zustand der Vorrichtung 1 darstellt, in welchem die heraustrennbare Sektion 7 der Außenstruktur 2 zur Bereitstellung eines Service-Zugangs herausgetrennt ist.

Dabei weist die heraustrennbare Sektion 7 eine geringere flächige Erstreckung auf als die Verstärkungsplatte 3, wobei die Durchgangsöffnung 5 eine geringere flächige Erstreckung aufweist als die heraustrennbare Sektion 7, so dass ein erster Kontaktbereich 4b der Kontaktfläche 4 zwischen der Verstärkungsplatte 3 und einem Randbereich 7a der heraustrennbaren Sektion 7 und ein zweiter Kontaktbereich 4c der Kontaktfläche 4 zwischen der Verstärkungsplatte 3 und einem an den Randbereich 7a der heraustrennbaren Sektion 7 angrenzenden Bereich 2a der Struktur 2 ausgebildet ist.

Exemplarisch ist die heraustrennbare Sektion 7 mittels einer Fräse aus der Außenstruktur 2 herausgefräst worden. Dabei kann die Verstärkungsplatte 3 nach dem Fräsvorgang entlang des Fräskopfverlaufs eine Vertiefung aufweisen, die der Fräskopf bewirkt hat.

Vorzugsweise ist die herausgetrennte Sektion 7 als Zugangsdeckel ausgebildet.

Der zweite Kontaktbereich 4b der Kontaktfläche 4 dient beispielsweise als Schulter für die herausgetrennte Sektion 7, um die Sektion 7 abzustützen.

Fig. 3 zeigt eine schematische Schnittansicht einer Vorrichtung 1 zur Schaffung eines ausgesteiften Bereichs an einer Außenstruktur 2 eines Luftfahrzeugs zur bedarfsweisen nachträglichen Bereitstellung eines Service-Zugangs mit einer an der Verstärkungsplatte 3 befestigten Sektion 7 der Außenstruktur 2.

In Fig. 3 ist ein Zustand der Vorrichtung 1 dargestellt, in welchem die herausgetrennte Sektion 7 der Außenstruktur 2 an der Verstärkungsplatte 3 befestigt ist, nachdem die Wartungsarbeiten eines Wartungstechnikers mithilfe des erstellten Service-Zugangs abgeschlossen sind.

Die Sektion 7 ist beispielsweise mittels einer Schraubverbindung an der Verstärkungsplatte 3 befestigt, insbesondere dann wenn eine lösbare Befestigung vorgesehen ist. Für eine unlösbare Befestigung kann die Sektion 7 mittels eines Verbindungswerkstoffes, vorzugsweise mittels des Verbindungswerkstoffes 6, mit der Verstärkungsplatte 3 verklebt sein. Ferner ist die Sektion 7 derart an der Verstärkungsplatte 3 befestigt, dass die Außenseite der Sektion 7 plan mit der Außenseite der Außenstruktur 2 ist. Auf diese Weise werden Beeinträchtigungen, z.B. der Aerodynamik, verringert.

Optional kann ein Dichtstoff 9 vorgesehen sein, welcher die Außenstruktur 2 abdichtet. Der Dichtstoff 9 ist vorzugsweise in einen durch den Fräsvorgang hergerufenen Spalt zwischen der Außenstruktur 2 und der Sektion 7 eingebracht. Dabei kann der Dichtstoff 9 auch in der Vertiefung, die der Fräskopf in der Verstärkungsplatte 3 bewirkt hat, vorgesehen sein.

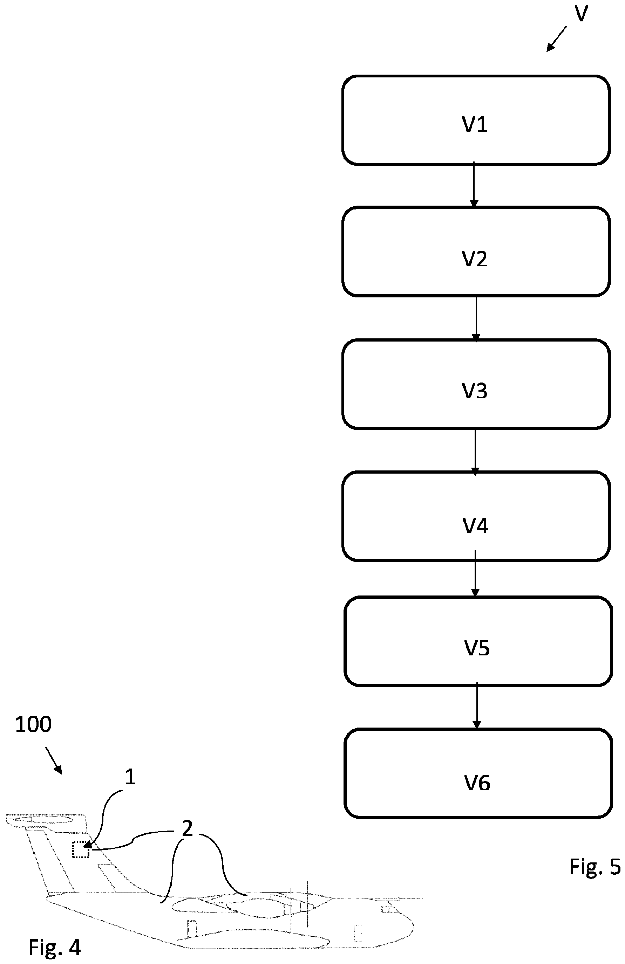

Fig. 4 zeigt eine schematische Seitenansicht eines Luftfahrzeugs 100 mit einer Vorrichtung 1. Die Vorrichtung 1 weist dabei im Wesentlichen die gleichen Merkmale auf wie die Vorrichtung nach Fig. 1.

Beispielhaft ist die Außenstruktur 2 als Tragfläche, Rumpf, Nacelle, Seitenleitwerk oder dergleichen ausgebildet.

Fig. 5 zeigt ein Ablaufdiagramm eines Verfahrens V zur Herstellung und Nutzung eines Service-Zugangs für eine Außenstruktur 2 eines Luftfahrzeugs. Das Verfahren V umfasst beispielhaft einen Schritt Bereitstellen V1, einen Schritt Heraustrennen V2, einen Schritt Durchführen V3, einen Schritt Verschließen V4, einen Schritt Befestigen V5 und einen Schritt Abdichten V6.

Beim Bereitstellen V1 wird exemplarisch eine Vorrichtung 1 mit den Merkmalen der Vorrichtung 1 nach Fig. 1 bereitgestellt. Vorzugsweise wird die Vorrichtung 1 bereits bei der Produktion des Luftfahrzeugs integriert.

Zusätzlich umfasst das Verfahren V das Heraustrennen V2 einer Sektion 7 der Außenstruktur 2 innerhalb der Kontaktfläche 4 zum Bereitstellen des Service-Zugangs, wobei die Sektion 7 eine geringere flächige Erstreckung aufweist als die Verstärkungsplatte 3. Insbesondere wird ausschließlich die Sektion 7 der Außenstruktur 2 herausgetrennt. Vorzugsweise ist der Service-Zugang verschließbar ausgebildet.

In dem beispielhaften Verfahren V wird die Sektion 7 durch ein Fräsen der Außenstruktur 2 herausgetrennt. Jedoch ist sie nicht darauf beschränkt, sondern kann optional mit einer Säge, einem Laserschneidgerät oder anderen Werkzeugen herausgetrennt werden. Nach dem Heraustrennen V2 liegt die Vorrichtung 1 beispielhaft wie in Fig. 2 gezeigt und beschrieben ist vor.

Darüber hinaus kann das Verfahren V ferner den Schritt Durchführen V3 von Wartungsarbeiten an einem Ausstattungsgegenstand des Luftfahrzeugs anhand des Service-Zugangs aufweisen. Beispielsweise können somit beschädigte Hydraulikeinrichtungen repariert werden. Insbesondere handelt es sich bei den Wartungsarbeiten um ungeplante Wartungsarbeiten von Bauteilen, die ursprünglich wartungsfrei entwickelt und implementiert wurden, allerdings dann doch unvorhergesehen einen Fehler aufweisen.

Ferner kann das Verfahren V den Schritt Verschließen V4 des Service-Zugangs mittels der herausgetrennten Sektion 7 der Außenstruktur 2 aufweisen.

Weiterhin kann die herausgetrennte Sektion 7 der Außenstruktur 2 an der Verstärkungsplatte 3 unlösbar oder lösbar befestigt werden V5. Ist von einem erneuten Fehler auszugehen, kann die Sektion 7 lösbar an der Verstärkungsplatte 3 montiert werden, so dass im erneuten Fehlerfall die Sektion 7 nicht erneut herausgetrennt werden muss, sondern über die lösbare Befestigung geöffnet wird. Beim lösbaren Befestigen V5 wirkt die herausgetrennte Sektion 7 vergleichbar mit einer Zugangsklappe, welche immer wieder geöffnet beziehungsweise geschlossen werden kann.

Darüber hinaus kann das Verfahren V ferner den Schritt Abdichten V6 der Außenstruktur 2 mittels eines Dichtstoffes 9 aufweisen, welcher in den beim Heraustrennen V2 entstandenen Spalt eingebracht wird. Der Dichtstoff 9 kann beispielsweise mit einer Klebstoffpistole in den Spalt eingespritzt werden. Nach dem Auftragen des Dichtstoffes 9 kann dieser Wärme, Feuchte und/oder UV-Strahlung ausgesetzt werden, um das Aushärten des Dichtstoffes 9 zu verbessern und/oder zu beschleunigen.

Nach Anwendung der Schritte Befestigen V5 sowie Abdichten V6 liegt die Vorrichtung 1 beispielhaft wie in Fig. 3 gezeigt und beschrieben ist vor.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

Beispielsweise ist die vorliegende Erfindung nicht auf die Anwendung von aerodynamischen Außenstrukturen beschränkt, sondern kann ebenso auf herkömmliche Außenstrukturen und darin vorbereitete Zugangsklappen angewendet werden.

### Bezugszeichenliste

- 1: Vorrichtung
- 2: Außenstruktur
- 3: Verstärkungsplatte
- 4: Kontaktfläche
- 4a: Randbereich
- 4b: erster Kontaktbereich
- 4c: zweiter Kontaktbereich
- 5: Durchgangsöffnung
- 6: Verbindungswerkstoff
- 7: Sektion
- 7a: Randbereich
- 8: Trenneinrichtung
- 9: Dichtstoff
- 100: Luftfahrzeug
- V: Verfahren
- V1: Bereitstellen
- V2: Heraustrennen
- V3: Durchführen
- V4: Verschließen
- V5: Befestigen
- V6: Einbringen

## Patentansprüche

1. Vorrichtung (1) zur Schaffung eines ausgesteiften Bereichs an einer Außenstruktur (2) eines Luftfahrzeugs (100) zur bedarfsweisen nachträglichen Bereitstellung eines Service-Zugangs, die Vorrichtung (1) aufweisend:
eine Außenstruktur (2);
eine Verstärkungsplatte (3), welche in einem vorbestimmten Installationsbereich an einer Innenseite der Außenstruktur (2) angebracht ist und eine Kontaktfläche (4) zwischen der Verstärkungsplatte (3) und der Außenstruktur (2) ausbildet, wobei die Verstärkungsplatte (3) eine Durchgangsöffnung (5) entlang der Flächennormalen der Kontaktfläche (4) aufweist; und
einen Verbindungswerkstoff (6), welcher in einem Randbereich (4a) der Kontaktfläche (4) die Verstärkungsplatte (3) mit der Außenstruktur (2) stoff- und/oder formschlüssig verbindet.

2. Vorrichtung (1) nach Anspruch 1, wobei die Außenstruktur (2) eine heraustrennbare Sektion (7) aufweist, welche eine geringere flächige Erstreckung aufweist als die Verstärkungsplatte (3), wobei die Durchgangsöffnung (5) eine geringere flächige Erstreckung aufweist als die heraustrennbare Sektion (7), so dass ein erster Kontaktbereich (4b) der Kontaktfläche (4) zwischen der Verstärkungsplatte (3) und einem Randbereich (7a) der heraustrennbaren Sektion (7) und ein zweiter Kontaktbereich (4c) der Kontaktfläche (4) zwischen der Verstärkungsplatte (3) und einem an den Randbereich (7a) der heraustrennbaren Sektion (7) angrenzenden Bereich (2a) der Struktur (2) ausgebildet ist.

3. Vorrichtung (1) nach Anspruch 2, ferner aufweisend eine Trenneinrichtung (8) zur rückstandsfreien Ablösung der heraustrennbaren Sektion (7) der Außenstruktur (2) von der Verstärkungsplatte (3), welche zumindest abschnittsweise in dem ersten Kontaktbereich (4b) der Kontaktfläche (4) vorgesehen ist.

4. Vorrichtung (1) nach Anspruch 3, wobei die Trenneinrichtung (8) als Trennfolie, als Abreißgewebe oder als Trennmittel ausgebildet ist.

5. Vorrichtung (1) nach Anspruch 3 oder 4, wobei die Trenneinrichtung (8) vollständig entlang des Randbereichs (7a) der heraustrennbaren Sektion (7) ausgebildet ist.

6. Vorrichtung (1) nach einem der Ansprüche 2 bis 5, wobei der erste Kontaktbereich (4b) als Stützrahmen zum Abstützen des Randbereichs (7a) der heraustrennbaren Sektion (7) ausgebildet ist.

7. Vorrichtung (1) nach wenigstens einem der vorhergehenden Ansprüche, wobei die Verstärkungsplatte (3) zumindest eines der folgenden Materialien aufweist: ein metallisches Material, insbesondere Aluminium, ein keramisches Material, ein Polymermaterial und ein faserverstärktes Verbundmaterial, insbesondere ein Kohlenstofffaserverbundmaterial oder ein Glasfaserverbundmaterial.

8. Vorrichtung (1) nach wenigstens einem der vorhergehenden Ansprüche, wobei die Verstärkungsplatte (3) aus demselben Material hergestellt ist wie die Außenstruktur (2).

9. Vorrichtung (1) nach wenigstens einem der vorhergehenden Ansprüche, wobei der Verbindungswerkstoff (6) zumindest eines der folgenden Materialien enthält: Epoxidharz, Cyanacrylat, Acrylatmonomere, MS-Polymere, Polyurethan, Thermoplaste und Silikon.

10. Luftfahrzeug (100) mit einer Vorrichtung (1) nach wenigstens einem der vorhergehenden Ansprüche.

11. Verfahren (V) zur Herstellung und Nutzung eines Service-Zugangs für eine Außenstruktur (2) eines Luftfahrzeugs (100), das Verfahren (V) umfassend:
Bereitstellen (V1) einer Vorrichtung (1) gemäß einem der vorhergehenden Ansprüche;
Heraustrennen (V2) einer Sektion (7) der Außenstruktur (2) zumindest bereichsweise entlang der Kontaktfläche (4) zum Bereitstellen des Service-Zugangs, wobei die Sektion (7) eine geringere flächige Erstreckung aufweist als die Verstärkungsplatte (3).

12. Verfahren (V) nach Anspruch 11, wobei Heraustrennen (V2) der Sektion (7) ein Fräsen der Außenstruktur (2) umfasst.

13. Verfahren (V) nach Anspruch 11 oder 12, ferner umfassend Durchführen (V3) von Wartungs- und Instandhaltungsarbeiten an einem Ausstattungsgegenstand des Luftfahrzeugs anhand des Service-Zugangs.

14. Verfahren (V) nach einem der Ansprüche 11 bis 13, ferner umfassend Verschließen (V4) des Service-Zugangs mittels der herausgetrennten Sektion (7) der Außenstruktur (2); und
Befestigen (V5) der herausgetrennten Sektion (7) der Außenstruktur (2) an der Verstärkungsplatte (3).

15. Verfahren (V) nach einem der Ansprüche 11 bis 14, ferner umfassend Abdichten (V6) der Außenstruktur (2) mittels eines Dichtstoffes (9), welcher in einen beim Heraustrennen (V2) entstandenen Spalt eingebracht wird.
